# EUROPÄISCHE PATENTSCHRIFT

(11) **EP 1 420 193 B1**
(45) Veröffentlichungstag und Bekanntmachung des Hinweises auf die Patenterteilung: **04.04.2007**
(21) Anmeldenummer: 03022994.2
(22) Anmeldetag: 10.10.2003
(51) Int. Cl.: F16H 7/12

(54) **Spannvorrichtung für einen Riementrieb von Hilfsaggregaten**
Tensioning device for a belt drive of an accessory
Tendeur d' entraînement pour courroie d' accessoires

(30) Priorität: 16.11.2002 DE 10253449
(43) Veröffentlichungstag der Anmeldung: 19.05.2004
(73) Patentinhaber: Bayerische Motoren Werke Aktiengesellschaft, 80809 München (DE); Peugeot Citroen Automobiles Société Anonyme, 78140 Velizy Villacoublay (FR)
(72) Erfinder: Lemberger, Heinz, 85774 Unterföhring (DE)

(56) Entgegenhaltungen:
- DE-A1- 3 719 794
- DE-A1- 3 912 944
- US-A- 3 242 751
- PATENT ABSTRACTS OF JAPAN Bd. 006, Nr. 210 (M-166), 22. Oktober 1982 (1982-10-22) & JP 57 116960 A (NIHON KOUGAKU KOGYO KK), 21. Juli 1982 (1982-07-21)
- PATENT ABSTRACTS OF JAPAN Bd. 008, Nr. 274 (M-345), 14. Dezember 1984 (1984-12-14) & JP 59 144846 A (IMAO SEISAKUSHO:KK), 20. August 1984 (1984-08-20)
- PATENT ABSTRACTS OF JAPAN Bd. 007, Nr. 102 (M-211), 30. April 1983 (1983-04-30) & JP 58 024644 A (IMAO SEISAKUSHO:KK), 14. Februar 1983 (1983-02-14)

## Beschreibung

Die Erfindung bezieht sich nach dem Oberbegriff des Patentanspruches 1 auf eine Spannvorrichtung für einen Riementrieb von Hilfsaggregaten und eine Brennkraftmaschine, wobei die Spannvorrichtung eine mit einem Antriebsriemen zusammenwirkende Spannrolle aufweist an einem schwenkbeweglich angeordneten Spannarm, der drehfest verbunden ist mit einem Endabschnitt einer gedämpften Drehstabfeder, die andernends über ein Gehäuse mit der Brennkraftmaschine in Verbindung steht.

Eine derartige Spannvorrichtung ist beispielsweise aus der gattungsgemäßen DE 43 45 150 A1 bekannt, wobei die Drehstabfeder im spannarmfernen Endabschnitt mit einem Radialflansch einer Reib-Dämpfungseinrichtung zusammenwirkt, der eine axial vorgespannte, das Aufnahme-Gehäuse der Drehstabfeder koaxial umschließende Schrauben-Druckfeder zugeordnet ist.

Dies ergibt ein in den Querabmessungen zur Drehstabfeder relativ groß bauendes Anschluss-Gehäuse mit einem Befestigungsflansch zur Anordnung der Spannvorrichtung an der Stirnseite der Brennkraftmaschine.

Weiter ist aus der DE 40 01 689 C1 eine Riemen-Spannvorrichtung mit einem eine Spannrolle tragenden Spannarm bekannt, an dem eine Elastomer-Drehstabfeder angreift. Diese ist für eine Nachstellbewegung des Spannarmes über eine Dämpfungseinrichtung mit einer Schrauben-Torsionsfeder in Reihe geschaltet und von dieser bei Rückstellbewegungen abgekoppelt. Der Durchmesser des die Federn und die Dämpfungseinrichtung aufnehmenden, ohne Befestigungsmittel gezeigten Gehäuses bemisst sich insbesondere nach einem im Verhältniss zum Spannrollen-Durchmesser relativ groß gewählten Wälzlager.

Der Erfindung liegt die Aufgabe zugrunde, eine gattungsgemäße Spannvorrichtung derart weiterzubilden, dass bei stirnseitig der Brennkraftmaschine wegen einer kurbelwellenseitigen Riemen-Antriebsscheibe gering beabstandeten Riemenebene und seitlich der Brennkraftmaschine eng benachbart verteilt angeordneter Hilfsaggregate trotz geringem Anbauraum eine einwandfreie Anordnung an der Brennkraftmaschine zu erzielen ist.

Diese Aufgabe ist mit dem Patentanspruch 1 dadurch gelöst, dass die Spannvorrichtung über ein langgestrecktes Aufnahme-Gehäuse mit minimierten äußeren Querabmessungen an einer Längsseitenwandung der Brennkraftmaschine angeordnet ist, und dass die Drehstabfeder im wesentlichen entsprechend der Länge des Aufnahme-Gehäuses ausgebildet ist, wobei zwischen der Innenwandung des Aufnahme-Gehäuses und der Drehstabfeder eine Dämpfungseinrichtung angeordnet ist.

Mit der Erfindung kann eine voll funktionsfähige Riemen-Spannvorrichtung längsseitig der Brennkraftmaschine in einem von einer Längsseitenwandung der Brennkraftmaschine und nah der Längsseitenwandung zueinander eng beabstandeten Hilfsaggregaten begrenzten Einbauraum vorteilhaft angeordnet werden. Damit kann die Stirnseite der Brennkraftmaschine als Anbauort für die Spanneinrichtung entfallen mit dem weiteren Vorteil einer verringerten Längserstreckung der Brennkraftmaschine mit stirnseitig gering beabstandeter Riemenebene.

Eine für Serien-Brennkraftmaschinen vorteilhaft steife Anordnung ist dadurch erreicht, dass das Aufnahme-Gehäuse in einstückiger Verbindung mit einer Längsseitenwandung einer Ölwanne oder eines Kurbelgehäuses der Brennkraftmaschine angeordnet ist. Dafür bietet sich insbesondere eine gemeinsame Gussausbildung an.

Wird dagegen die erfindungsgemäße Spannvorrichtung lediglich für Sondermotoren in geringer Stückzahl gebraucht, bietet es sich an, dass das Aufnahme-Gehäuse als ein gesondertes Bauteil ausgebildet an einer Längsseitenwandung einer Ölwanne oder eines Kurbelgehäuses befestigt angeordnet ist.

Hinsichtlich der Dämpfungseinrichtung ist eine vorteilhafte Ausbildung dadurch erreicht, dass diese eine mittels Vulkanisation zwischen Drehstabfeder und Innenwandung des Aufnahme-Gehäuses ausgebildete gummielastische Drehschubfeder ist.

Bei einer Variante der Dämpfungseinrichtung ist diese als eine im Aufnahme-Gehäuse mit den Endbereichen der Drehstabfeder jeweils formschlüssig drehfest verbundene Schraubenfeder gestaltet, deren bei Torsionsbeanspruchung sich aufweitende Windungen mit der Innenwandung des Aufnahme-Gehäuses reibschlüssig zusammenwirken.

In weiterer Ausgestaltung der Erfindung ist eine im Querschnitt vieleckig gestaltete Drehstabfeder aus geschichteten Federblechstreifen vorgesehen, wobei die jeweilige Querschnitts-Gestaltung mittel unterschiedlich breiter Federblechstreifen erzielt ist. Diese Gestaltung der Drehstabfeder trägt über die Reibung zwischen den Federblechstreifen bei Torsionsbelastung ebenfalls zur Dämpfung bei.

Schließlich wird vorgeschlagen, dass der Spannarm über einen Zapfen unter Zwischenschaltung einer Gleitlagerbuchse im Aufnahme-Gehäuse gelagert ist. Für den Fall großer, von der Spann- und Umlenkrolle verursachter Biegebelastungen kann der Spannarm bei ausreichendem Einbauraum auch über ein am Außenumfang des Aufnahme-Gehäuses angeordnetes Lager, insbesondere geschlossenes Wälzlager, mittels einer angeformten Lagerhülse gelagert sein.

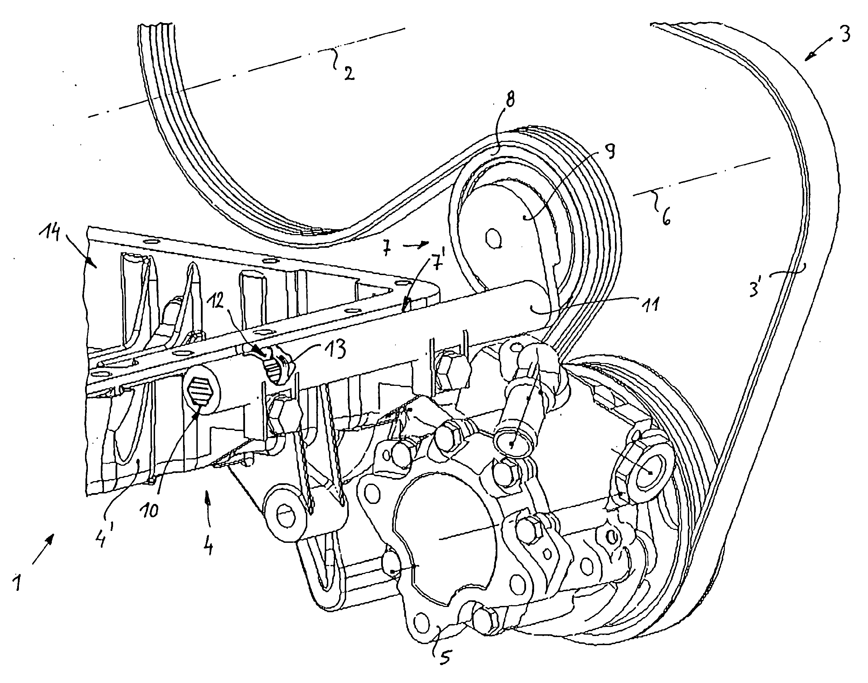

Die Erfindung ist anhand einer in der Zeichnung im Prinzip dargestellten Anordnung beschrieben.

Von einer lediglich angedeuteten Brennkraftmaschine 1 ist ein kurbelwellenseitiges Riemen-Antriebsrad mittels einer Drehachse 2 versinnbildlicht, wobei das Riemen - Antriebsrad mit einem Riementrieb 3 längsseitlich der Brennkraftmaschine 1 zueinander und zu einer Längsseitenwandung 4 der Brennkraftmaschine 1 eng benachbart angeordnete Hilfsaggregate 5 und 6 antreibt. Das Hilfsaggregat 5 ist z.B. eine Lenkhilfepumpe, während eine mit 6 bezeichnete Drehachse eine Riemen-Antriebsscheibe eines nicht gezeigten Klimakompressors versinnbildlicht. Des weiteren läuft der Riementrieb 3 in einer stirnseitig der Brennkraftmaschine 1 derart gering beabstandeten Riemenebene, dass unter den vorgenannten Bedingungen eine Riemen -Spannvorrichtung der herkömmlichen Bauart mit stirnseitiger Anordnung an der Brennkraftmaschine 1 nicht anwendbar ist.

In dem Riementrieb 3 ist eine Spannvorrichtung 7 angeordnet mit einer mit dem Antriebsriemen 3' zusammenwirkenden Spannrolle 8, wobei die zugleich als Umlenkrolle dienende Spannrolle 8 an einem schwenkbeweglich angeordneten Spannarm 9 vorgesehen ist, der spannrollenseitig drehfest verbunden ist mit einem Endabschnitt einer gedämpften Drehstabfeder 10.

Zur erfindungsgemäß längsseitig der Brennkraftmaschine 1 vorgesehenen Anordnung des Spannteils 7' der Spannvorrichtung 7 ist die Drehstabfeder 10 über ein langgestrecktes Aufnahme-Gehäuse 11 mit minimierten äußeren Querabmessungen an einer Längsseitenwandung 4 der Brennkraftmaschine 1 angeordnet. Die entsprechend der Länge des Aufnahme-Gehäuses 11 ausgebildete Drehstabfeder 10 ist z.B. mit diesem Gehäuse 11 mittels Formschluss drehfest verbunden. Weiter ist zwischen der Innenwandung des Aufnahme-Gehäuses 11 und der Drehstabfeder 10 eine gesonderte Dämpfungseinrichtung 12 angeordnet.

Als Dämpfungseinrichtung 12 kann eine mittels Vulkanisation zwischen Drehstabfeder 10 und Innenwandung des Aufnahme-Gehäuses 11 ausgebildete, gummielastische Drehschubfeder 13 vorgesehen sein.

Eine weitere Möglichkeit einer Dämpfungseinrichtung 12 besteht darin, dass diese eine im Aufnahme-Gehäuse 11 mit den Endbereichen der Drehstabfeder 10 jeweils formschlüssig drehfest verbundene Schraubenfeder (nicht gezeigt) ist, deren bei Torsionsbeanspruchung sich aufweitende Windungen an der Innenwandung des Aufnahme-Gehäuses 11 zur Anlage kommen zur reibschlüssigen Dämpfung der Spannvorrichtung 7.

Vorzugsweise ist für die Spannvorrichtung 7 eine im Querschnitt vieleckig gestaltete Drehstabfeder 10 aus geschichteten Federblechstreifen vorgesehen, wobei die jeweilige Querschnitts-Gestaltung mittels unterschiedlich breiter Federblechstreifen erzielt ist. Insbesondere ist ein sechseckiger Querschnitt der Drehstabfeder 10 bevorzugt, der eine günstige Anbindung der gummielastischen Drehschubfeder 13 ergibt.
Bei Einsatz einer Schraubenfeder als Dämpfungseinrichtung 12 erscheint eine Drehstabfeder 10 von viereckigem Querschnitt vorteilhaft.

Zur Aufnahme der auf den Spannarm 8 einwirkenden Kräfte kann der Spannarm 8 über einen formschlüssig mit der Drehstabfeder 10 zusammenwirkenden, nicht gezeigten Zapfen unter Zwischenschaltung einer Gleitlagerbuchse im Aufnahme-Gehäuse 11 gelagert sein. Bei ausreichendem Einbauraum im spannarmseitigen Endbereich des Aufnahme-Gehäuses 11 kann der Spannarm 8 über ein am Außenumfang des Aufnahme-Gehäuses 11 angeordnetes Lager, vorzugsweise ein gekapseltes Wälzlager, mittels einer am Spannarm 8 angeformten Lagerhülse gelagert sein.

Mit der Erfindung ist in vorteilhafter Weise eine Spannvorrichtung 7 mit derart kleinbauendem Spannteil 7' geschaffen, dass dieses längsseitig der Brennkraftmaschine 1 an dieser zwischen gering beabstandeten und zueinander eng benachbarten Hilfsaggregaten 5,6 anzuordnen ist. Wie aus der einzigen Zeichnung ersichtlich, ist das Spannteil 7' an einer Längsseitenwandung 4' einer Ölwanne 14 der Brennkraftmaschine 1 angeordnet.

## Patentansprüche

1. Spannvorrichtung für einen Riementrieb von Hilfsaggregaten und eine Brennkraftmaschine,
- wobei die Spannvorrichtung (7) eine mit einem Antriebsriemen (3') zusammenwirkende Spannrolle (8) aufweist an einem schwenkbeweglich angeordneten Spannarm (9), der
- drehfest verbunden ist mit einem Endabschnitt einer gedämpften Drehstabfeder (10), die
- andernends über ein Gehäuse (11) mit der Brennkraftmaschine (1) in Verbindung steht,
**dadurch gekennzeichnet,**
- **dass** die Spannvorrichtung (7) über ein langgestrecktes Aufnahme-Gehäuse (11) mit minimierten äußeren Querabmessungen an einer Längsseitenwand (4,4') der Brennkraftmaschine (1) angeordnet ist, und
- **dass** die Drehstabfeder (10) im wesentlichen entsprechend der Länge des Aufnahme-Gehäuses (11) ausgebildet ist, wobei
- zwischen der Innenwandung des Aufnahme-Gehäuses (11) und der Drehstabfeder (10) eine gesondert Dämpfungseinrichtung (12) angeordnet ist.

2. Spannvorrichtung und Brennkraftmaschine nach Anspruch 1, **dadurch gekennzeichnet,**
- **dass** das Aufnahme-Gehäuse (11) in einstückiger Verbindung mit einer Längsseitenwandung (4') einer Ölwanne oder eines Kurbelgehäuses der Brennkraftmaschine (1) angeordnet ist.

3. Spannvorrichtung und Brennkraftmaschine nach Anspruch 1, **dadurch gekennzeichnet,**
- **dass** das Aufnahme-Gehäuse (11) als ein gesondertes Bauteil ausgebildet an einer Längsseitenwandung (4') einer Ölwanne (14) oder eines Kurbelgehäuses der Brennkraftmaschine (1) befestigt angeordnet ist.

4. Spannvorrichtung und Brennkraftmaschine Anspruch 1, **dadurch gekennzeichnet,**
- **dass** die Dämpfungseinrichtung (12) eine mittels Vulkanisation zwischen Drehstabfeder (10) und Innenwandung des Aufnahme-Gehäuses (11) ausgebildete gummielastische Drehschubfeder (13) ist.

5. Spannvorrichtung und Brennkraftmaschine nach Anspruch 1, **dadurch gekennzeichnet,**
- **dass** die Dämpfungseinrichtung (12) eine im Aufnahme-Gehäuse (11) mit den Endbereichen der Drehstabfeder (10) jeweils formschlüssig drehfest verbundene Schraubenfeder ist, deren
- bei Torsionsbeanspruchung sich aufweitende Windungen mit der Innenwandung des Aufnahme-Gehäuses (11) reibschlüssig zusammenwirken.

6. Spannvorrichtung und Brennkraftmaschine nach den Ansprüchen 1-5, **dadurch gekennzeichnet,**
- **dass** eine im Querschnitt vieleckig gestaltete Drehstabfeder (10) aus geschichteten Federblechstreifen vorgesehen ist, wobei
- die jeweilige Querschnittsgestaltung mittels unterschiedlich breiter Federblechstreifen erzielt ist.

7. Spannvorrichtung und Brennkraftmaschine nach den Ansprüchen 1-6, **dadurch gekennzeichnet,**
- **dass** der Spannarm (8) über einen Zapfen unter Zwischenschaltung einer Gleitlagerbuchse im Aufnahme-Gehäuse (11) oder
- über ein am Außenumfang des Aufnahme-Gehäuses (11) angeordnetes Lager mittels einer angeformten Lagerhülse gelagert ist.

## Claims

1. A tightening device for a belt drive of auxiliary units and for an internal combustion engine,
- wherein the tightening device (7) comprises a tightening pulley (8) co-operating with a drive belt (3') and disposed on a pivotable arm (9) which
- is co-rotatably connected to an end portion of a damped torsion bar (10),
- the other end of which is connected to the engine (1) via a casing (11),
**characterised in that**
- the tightening device (7) is mounted on a longitudinal side wall (4, 4') of the engine (1) via an elongate receiving casing (11) having reduced outer transverse dimensions, and
- the torsion bar (10) is substantially equal in length to the casing (11), wherein
- a separate damping device (12) is disposed between the torsion bar (10) and the inner wall of the casing (11).

2. A tightening device and internal combustion engine according to claim 1, **characterised in that**
- the casing (11) is integrally connected to a longitudinal side wall (4') of an oil sump or a crankcase of the engine (1).

3. A tightening device and internal combustion engine according to claim 1, **characterised in that**
- the casing (11) is a separate component fastened to a longitudinal side wall (4') of an oil sump (14) or crankcase of the engine (1).

4. A tightening device and internal combustion engine according to claim 1, **characterised in that**
- the damping device (12) is an elastomeric turning and sliding spring (13) formed by vulcanisation between the torsion bar (10) and the inner wall of the casing (11).

5. A tightening device and internal combustion engine according to claim 1, **characterised in that**
- the damping device (12) is a helical spring co-rotatably and positively connected to the end regions of the torsion bar (10) in the casing (11), wherein
- under torsion the turns of the spring open out and frictionally cooperate with the inner wall of the casing (11).

6. A tightening device and internal combustion engine according to claims 1 - 5, **chara cterised in that**
- a polygonal-section torsion bar (10) is made up of laminated spring steel strips, wherein
- the cross-sectional shape is obtained by using strips of varying width.

7. A tightening device and internal combustion engine according to claims 1 - 6, **chara cterised in that**
- the tightening arm (8) is mounted on a lug with interposition of a journal-bearing bush in the casing (11) or
- on a bearing disposed on the outer periphery of the casing (11), via an integrally formed bearing sleeve.

## Revendications

1. Dispositif tendeur pour un entraînement à courroie d'accessoires et un moteur à combustion interne, dans lequel
- le dispositif tendeur (7) présente un galet tendeur (8) coopérant avec une courroie de transmission (3') sur un bras de tension (9) pouvant pivoter, et
- solidaire en rotation à un tronçon d'extrémité d'un ressort à barre de torsion (10) amorti, dont
- l'autre extrémité est reliée au moteur à combustion interne (1) par un carter (11),
**caractérisés en ce que**
- le dispositif tendeur (7) est disposé sur une paroi de côté long (4, 4') du moteur à combustion interne (1) par l'intermédiaire d'un carter de réception (11) étiré en longueur ayant des dimensions transversales extérieures réduites,
- le ressort à barre de rotation (10) correspond, pour l'essentiel, à la longueur du carter de réception (11), et
- un dispositif d'amortissement (12) séparé est disposé entre la paroi interne du carter de réception (11) et le ressort à barre de torsion (10).

2. Dispositif tendeur et moteur à combustion interne selon la revendication 1,
**caractérisés en ce que**
le carter de réception (11) forme une seule pièce avec une paroi de côté long (4') d'un carter d'huile ou d'un carter de vilebrequin du moteur à combustion interne (1).

3. Dispositif tendeur et moteur à combustion interne selon la revendication 1,
**caractérisés en ce que**
le carter de réception (11) est fixé, en tant que composant séparé, sur une paroi de côté long (4') d'un carter d'huile (14) ou d'un carter de vilebrequin du moteur à combustion interne (1).

4. Dispositif tendeur et moteur à combustion interne selon la revendication 1,
**caractérisés en ce que**
le dispositif d'amortissement (12) est un ressort de torsion coulissant (13), ayant l'élasticité du caoutchouc, configuré par vulcanisation entre le ressort à barre de torsion (10) et la paroi interne du carter de réception (11).

5. Dispositif tendeur et moteur à combustion interne selon la revendication 1,
**caractérisés en ce que**
le dispositif d'amortissement (12) est un ressort hélicoïdal solidaire en rotation, dans le carter de réception (11) aux zones d'extrémité du ressort à barre de torsion (10) respectivement par complémentarité de formes, dont les spires s'élargissant en cas de contrainte en torsion coopèrent par friction avec la paroi interne du carter de réception (11).

6. Dispositif tendeur et moteur à combustion interne selon les revendications 1 à 5,
**caractérisés en ce qu'**
un ressort à barre de torsion (10) à section carrée est fabriqué dans un feuillard de tôle à ressort stratifié, la section respective étant obtenue au moyen de feuillards de tôle à ressort de largeur différente.

7. Dispositif tendeur et moteur à combustion interne selon les revendications 1 à 6,
**caractérisés en ce que**
le bras de tension (8) est positionné, dans le carter de réception (11), par l'intermédiaire d'un pivot en intercalant un coussinet de palier ou par l'intermédiaire d'un palier disposé à la périphérie extérieure du carter de réception (11) au moyen d'un manchon de palier rapporté par moulage.
